# EUROPÄISCHE PATENTSCHRIFT

(11) **EP 0 520 992 B1**
(45) Veröffentlichungstag und Bekanntmachung des Hinweises auf die Patenterteilung: **24.08.1994**
(21) Anmeldenummer: 91902101.4
(22) Anmeldetag: 19.01.1991
(51) Int. Cl.: B60T 8/32

(54) **ANTIBLOCKIERREGELSYSTEM**
ANTILOCK BRAKING SYSTEM
SYSTEME DE REGLAGE D'ANTIBLOCAGE

(30) Priorität: 22.03.1990 DE 4009195
(43) Veröffentlichungstag der Anmeldung: 07.01.1993
(73) Patentinhaber: ROBERT BOSCH GMBH, 70442 Stuttgart (DE)
(72) Erfinder: BECKER, Rolf, D-7257 Ditzingen (DE); MICHEL, Thomas, D-7252 Weil der Stadt (DE); MEISSNER, Manfred, D-7145 Unterriexingen (DE); GUTÖHRLEIN, Bernd, D-7000 Stuttgart 1 (DE)
(86) Internationale Anmeldenummer: EP9100098
(87) Internationale Veröffentlichungsnummer: WO9114604

(56) Entgegenhaltungen:
- EP-A- 322 911
- DE-A- 3 644 259
- DE-A- 3 706 514
- GB-A- 2 151 320

## Beschreibung

### Stand der Technik

Aus der DE-A1 3706 514 ist es bekannt, bei einem zweirad-angetriebenen Fahrzeug den Verlauf der Referenzgeschwindigkeit für die Schlupfbildung außerhalb der Regelung durch die Geschwindigkeit des langsameren der beiden nicht angetriebenen Räder zu bestimmen. Im Instabilitätsfall bestimmt die Steigung einer Hilfsreferenzgeschwindigkeit, deren Verlauf außerhalb der Regelung durch die Geschwindigkeit des schnelleren der nicht angetriebenen Räder bestimmt wird, den Verlauf der Referenzgeschwindigkeit.

### Vorteile der Erfindung

Durch die Lehren der Ansprüche 1 und 3 wird der oben erläuterte Stand der Technik auf allradgetriebene Fahrzeuge übertragen. Es werden nunmehr alle Räder in die Referenzbildung einbezogen. Es gelingt dabei die Eliminierung des durch die bei Kurvenfahrt auftretenden Raddrehzahlenunterschiede verursachten Schlupfs, der sonst zu einem zu empfindlichen Regelbeginn führen würde.

Die in den Ansprüchen 2 und 3 beschriebene Anbindung der Referenzgeschwindigkeit an die Hilfsreferenzgeschwindigkeit bewirkt, daß eine zu tief liegende Referenzgeschwindigkeit vermieden wird. Die Maßnahmen der Ansprüche 4 und 5 vermindern die unerwünschte Erhöhung der Referenzgeschwindigkeit bei durchdrehenden Rädern. Die Steigung der Hilfsreferenzgeschwindigkeit kann auch als Fahrzeugverzögerung bei der Regelung mitbenutzt werden.

### Figurenbeschreibung

Es zeigen:
- Fig. 1: eine Prinzipdarstellung eines Antiblockierreglers,
- Fig. 2: die Schlupfbildung innerhalb der Auswerteschaltung der Fig. 1 mit der erfindungsgemäßen Referenzgeschwindigkeitsgrößenbildung,
- Fig. 3-5: Diagramm zur Erläuterung

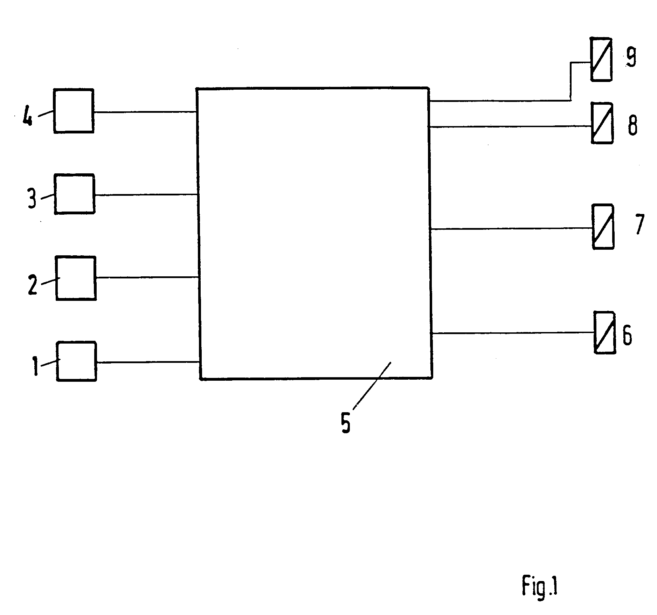

Fig. 1 zeigt die Komponenten eines Antiblockierregelsystems. Mit 1-4 sind den vier Fahrzeugrädern zugeordnete Meßwertgeber zur Bestimmung der Radgeschwindigkeiten bezeichnet.

Eine Auswertschaltung, der die Geschwindigkeitssignale den Meßwertgeber 1-4 zugeführt werden, trägt das Bezugszeichen 5 und vier Magnetventile zur Bremsdruckvariation, die von in der Auswerteschaltung 5 erzeugten Bremsdrucksteuersignalen angesteuert wurden, die Bezugszeichen 6-9.

In der Auswerteschaltung 5 werden neben anderen Signalen auch Schlupfsignale S₁ bis S₄ gebildet, die in der im Block 5 enthaltenen Ansteuerlogik bei der Bildung der Ansteuersignale für die Ventile 6 bis 9 verwendet werden. Die Schlupfsignale S₁ bis S₄ werden aus den Geschwindigkeitssignalen der diesen Rädern zugeordneten Meßwertgeber 1 und 4 gewonnen. Die Signale sind mit V₁, V₂, V₃ und V₄ bezeichnet.

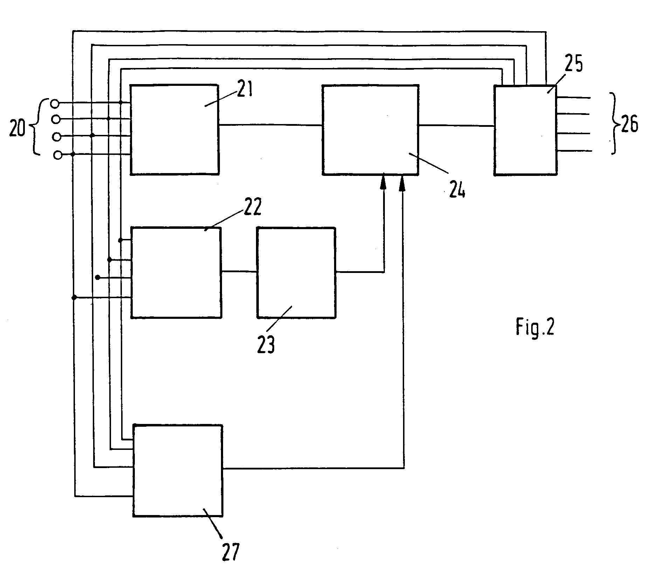

Eine mögliche Schaltung für die Schlupfbildung zeigt Fig. 2.

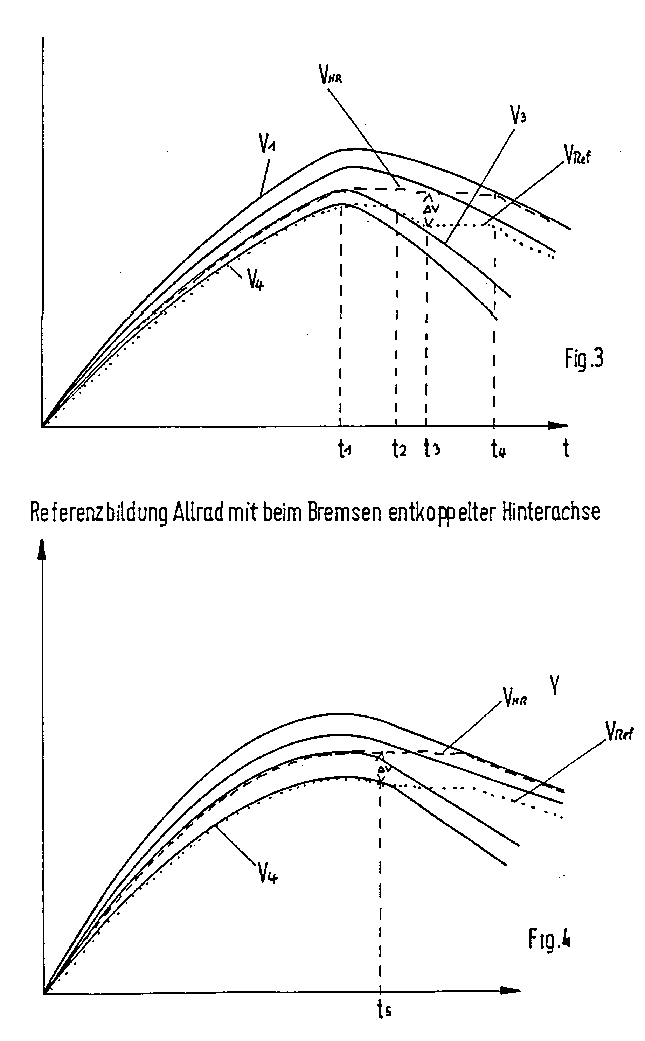

Über die Klemmen 20 der Fig. 2 werden die vier Radgeschwindigkeiten des allradgetriebenen Fahrzeugs Blöcken 21, 22 und 25 zugeführt. Die Blöcke 21 und 22 sind Auswahlblöcke. Block 21 wählt bei ansteigender Geschwindigkeit den Geschwindigkeitsverlauf V₄ des langsamsten Rads aus (siehe Fig. 3 gepunkteter Verlauf = Referenzgeschwindigkeit).

Steigt ab t₁ die Radgeschwindigkeit V₄ nicht mehr an, so wird der erreichte Geschwindigkeitswert V₄ festgehalten bis bei t₂ die Geschwindigkeit V₃ des drittschnellste Rad den festgehaltenen Geschwindigkeitswert V₄ trifft. Ab dem Zeitpunkt t₂ bestimmt nun die Größe V₃ des drittschnellsten Rads den weiteren Verlauf der Referenzgeschwindigkeit bis bei t₃ der Abstand ΔV zwischen V₃ und der Hilfsreferenzgeschwindigkeit V_{HR} einen vorgegebenen Wert erreicht und nunmehr die Referenzgeschwindigkeit parallel zur Hilfsreferenzgeschwindigkeit geführt wird.

Die Hilfsreferenzgeschwindigkeit V_{HR} (gestrichelt) wird im Block 22 gebildet, in dem bei zunehmender Geschwindigkeit die drittschnellste Radgeschwindigkeit V₃ ausgewählt wird, dann ab t₁ der erreichte Geschwindigkeitswert festgehalten wird bis bei t₄ die Geschwindigkeit des schnellsten Rads V₁ den festgehaltenen Wert V₃ erreicht und danach den Verlauf der Hilfsreferenzgeschwindigkeit bestimmt.

Der Auswahlblock 21 gibt den Verlauf V_{Ref} an einen Block 24. Der Auswahlblock 22 gibt den Verlauf V_{HR} an einen Block 23, der die Steigung dieses Verlaufs bestimmt und den Steigungswert an den Block 24 liefert. Im Instabilitätsfall, d.h. bei plötzlichem Absinken des vom Block 21 gelieferten Geschwindigkeitssignals wegen einer Blockierneigung, bestimmt die Steigung der Hilfsreferenzgeschwindigkeit V_{HR} die Steigung der V_{Ref}, wenn deren negative Steigung die negative Steigung der Hilfsreferenzgeschwindigkeit übersteigt.

Werden die Hinterräder eines an sich allradgetriebenen Fahrzeugs beim Bremsen vom Antrieb entkoppelt, so wird im Block 21 bei zunehmender Geschwindigkeit die Geschwindigkeit des langsamsten Rads und bei abnehmender Geschwindigkeit die Geschwindigkeit V₄ des langsamsten der vom Antrieb entkoppelten Räder als V_{Ref} ausgewählt (bis t₅ in Fig. 4). Bei t₅ hat der Abstand ΔV zwischen Hilfsreferenz und der Geschwindigkeit V₄ einen vorgegebenen Abstand erreicht. In der Folge wird nun V_{Ref} parallel zur Hilfsreferenzgeschwindigkeit V_{HR} geführt. Diese Hilfsreferenzgeschwindigkeit wird, wie schon anhand der Fig. 3 beschrieben, gebildet.

In beiden Fällen (Fig. 3 und 4) wird die im Block 24 gebildete Referenzgeschwindigkeit (mit der Steigung der Hilfreferenz im Instabilitätsfall) dem Block 25 zur Bildung von Schlupfsignalen auf Leitungen 26 zugeführt.

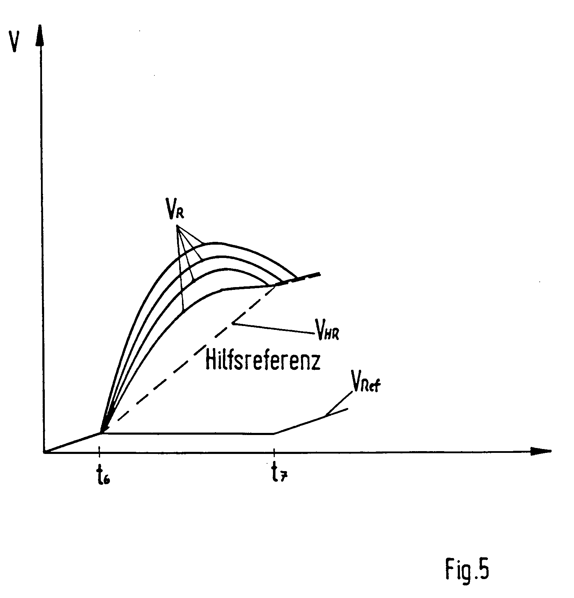

In einem weiteren Block 27 wird festgestellt, ob die Radgeschwindigkeiten physikalisch unmögliche Fahrzeugbeschleunigungswerte annehmen. Ist dies der Fall, so wird auf Durchdrehen der Räder erkannt und ein Befehl an den Block 24 gegeben, der dann die Referenzgeschwindigkeit Konstant hält. Dies zeigt Fig. 5, gemäß der die Räder ab t₆ durchdrehen. Ab hier wird die Referenzgeschwindigkeit festgehalten. Bei t₇ wird nicht mehr auf Durchdrehen erkannt. In der Durchdrehphase (t₆ bis t₇) wird der Anstieg der Hilfsreferenzgeschwindigkeit im Block 23 auf physikalisch mögliche Fahrzeugbeschleunigung begrenzt). Bei t₇ geht die Hilfsreferenzgeschwindigkeit in eine Steigung über, die durch die Steigung des 3. schnellsten Rades bestimmt wird.

Mit anderen Worten ausgedrückt gilt außerhalb der Regelung:
Die Hilfsreferenz wird in jedem Rechenzyklus mit den Radgeschwindigkeiten verglichen. Sofern alle kleiner sind als die Hilfsreferenz (also in der Regel nur bei Fahrzeugverzögerung), wird diese nach unten korrigiert. Sind aber ein oder zwei Radgeschwindigkeiten größer als die Hilfsreferenz, bleibt sie unverändert. Sind vier Radgeschwindigkeiten größer, wird auch die Hilfsreferenz erhöht.

Entsprechend wird die Referenzgeschwindigkeit angehoben, wenn alle Räder darüber liegen. Sind zwei Räder schneller als die Referenzgeschwindigkeit, wird sie konstant gehalten. Befinden sich zwei über der Referenzgeschwindigkeit, erfolgt ein Angleich nach unten.

Der Angleich nach oben unterbleibt, wenn auf Durchdrehen aller Räder erkannt wird. Dies ist der Fall, wenn alle Radgeschwindigkeiten über der Referenzgeschwindigkeit liegen, die während dieser Zeit mit dem Maximalwert von 0,7 g nach oben angeglichen wird. (Mit den in Betracht kommenden Fahrzeugen sind Beschleunigungen von mehr als 0,7 g nicht möglich. Daher lassen solche Fahrzustände auf Durchdrehen aller Räder schließen). Für diesen Zeitraum wird die Referenzgeschwindigkeit konstant gehalten.

## Patentansprüche

1. Verfahren zur Gewinnung einer Referenzgeschwindigkeit in einem Antiblockierregelsystem enthaltend eine Schlupfregelung, wozu aus den Radgeschwindigkeitssignalen ein Referenzgeschwindigkeitssignal und ein Hilfsreferenzgeschwindigkeitssignal abgeleitet werden, dessen Steigung im Falle einer Instabilität an wenigstens einem Rad den Verlauf des Referenzgeschwindigkeitssignals bestimmt, dadurch gekennzeichnet, daß bei Anwendung bei einem Fahrzeug mit vier angetriebenen Rädern das Hilfsreferenzgeschwindigkeitssignal mit dem Geschwindigkeitssignal des drittschnellsten Rads angehoben und mit dem Geschwindigkeitssignal des schnellsten Rads verringert wird und daß es zwischen dem Ende des Anhebens und dem Beginn des Verringern auf dem beim Anheben zuletzt erreichten Geschwindigkeitssignalwert festgehalten wird und daß das Referenzgeschwindigkeitssignal mit dem Geschwindigkeitssignal des langsamsten Rads angehoben und mit dem Geschwindigkeitssignal des drittschnellsten Rads verringert wird und daß es zwischen dem Ende des Anhebens und dem Beginn des Verringern auf dem beim Anheben zuletzt erreichten Geschwindigkeitswert festgehalten wird.

2. Verfahren nach Anspruch 1, dadurch gekennzeichnet, daß das Referenzgeschwindigkeitssignal ab Erreichen einer vorgegebenen Geschwindigkeitsdifferenz gegenüber dem Hilfsreferenzgeschwindigkeitssignal im Abstand dieser Geschwindigkeitsdifferenz parallel zu der Hilfsreferenzgeschwindigkeit verringert wird.

3. Verfahren zur Gewinnung einer Referenzgeschwindigkeit in einem Antiblockierregelsystem enthaltend eine Schlupfregelung, wozu aus den Radgeschwindigkeitssignalen ein Referenzgeschwindigkeitssignal und ein Hilfsreferenzgeschwindigkeitssignal abgeleitet werden, dessen Steigung im Falle einer Instabilität an wenigstens einem Rad den Verlauf des Referenzgeschwindigkeitssignals bestimmt, dadurch gekennzeichnet, daß bei Anwendung bei einem Fahrzeug mit vier angetriebenen Rädern jedoch beim Bremsen vom Antrieb entkoppelter Hinterachse das Hilfsreferenzgeschwindigkeitssignal mit dem Geschwindigkeitssignal des drittschnellsten Rads angehoben und mit dem Geschwindigkeitssignal des schnellsten Rads verringert wird und daß es zwischen dem Ende des Anhebens und dem Beginn des Verringern auf dem beim Anheben zuletzt erreichten Geschwindigkeitssignalwert festgehalten wird und daß das Referenzgeschwindigkeitssignal mit dem Geschwindigkeitssignal des langsamsten Rads angehoben und mit dem Geschwindigkeitssignal des langsamsten der vom Antrieb entkoppelten Räder verringert wird bis zwischen dem Referenzgeschwindigkeitssignal und dem Hilfsreferenzgeschwindigkeitssignal eine vorgegebene Differenz auftritt und daß das Referenzgeschwindigkeitssignal dann im Abstand dieser Differenz parallel zu des Hilfsreferenzgeschwindigkeitssignals geführt wird.

4. Verfahren nach einem der Ansprüche 1 - 3, dadurch gekennzeichnet, daß das Referenzgeschwindigkeitssignal bei durchdrehenden Rädern festgehalten wird.

5. Verfahren nach Anspruch 4, dadurch gekennzeichnet, daß auf durchdrehende Räder erkannt wird, wenn alle Räder eine höhere Radbeschleunigung als die physikalisch mögliche Fahrzeugbeschleunigung aufweisen.

## Claims

1. Method for obtaining a reference speed in an anti-lock brake system containing a slip control facility, for which purpose a reference speed signal and an auxiliary reference speed signal, the slope of which determines the characteristic of the reference speed signal in the case of an instability at at least one wheel, are derived from the wheel speed signals, characterised in that, when used on a vehicle with four driven wheels, the auxiliary reference speed signal is raised with the speed signal of the third-fastest wheel and reduced with the speed signal of the fastest wheel and in that, between the end of the raising and the beginning of the reduction, it is held at the last speed signal value attained during raising and in that the reference speed signal is raised with the speed signal of the slowest wheel and reduced with the speed signal of the third-fastest wheel and in that, between the end of the raising and the beginning of the reduction, it is held at the last speed value attained during raising.

2. Method according to Claim 1, characterised in that, after reaching a predetermined speed difference relative to the auxiliary reference speed signal, the reference speed signal is reduced parallel to the auxiliary reference speed at a distance corresponding to this speed difference.

3. Method for obtaining a reference speed in an anti-lock brake system containing a slip control facility, for which purpose a reference speed signal and an auxiliary reference speed signal, the slope of which determines the characteristic of the reference speed signal in the case of an instability at at least one wheel, are derived from the wheel speed signals, characterised in that, when used on a vehicle with four driven wheels but with a rear axle decoupled from the drive during braking, the auxiliary reference speed signal is raised with the speed signal of the third-fastest wheel and reduced with the speed signal of the fastest wheel and in that, between the end of the raising and the beginning of the reduction, it is held at the last speed signal value attained during raising and in that the reference speed signal is raised with the speed signal of the slowest wheel and reduced with the speed signal of the slowest of the wheels decoupled from the drive until a predetermined difference occurs between the reference speed signal and the auxiliary reference speed signal and in that the reference speed signal is then controlled parallel to the auxiliary reference speed signal at a distance corresponding to this difference.

4. Method according to one of Claims 1-3, characterised in that the reference speed signal is held if the wheels are spinning.

5. Method according to Claim 4, characterised in that wheels are concluded to be spinning if all the wheels have a higher wheel acceleration than the physically possible vehicle acceleration.

## Revendications

1. Procédé pour obtenir une vitesse de référence dans un système de régulation antiblocage comportant une régulation de patinage, en dérivant à partir des signaux de vitesse de roue, un signal de vitesse de référence et un signal auxiliaire de vitesse de référence dont l'augmentation, en cas d'une instabilité sur au moins une roue, détermine le profil du signal de vitesse de référence, caractérisé en ce que dans son application à un véhicule à quatre roues motrices, le signal de vitesse de référence est augmenté par le signal de vitesse de la troisième roue la plus rapide et il est diminué avec le signal de vitesse de la roue la plus rapide et en ce qu'entre la fin de l'augmentation et le début de la réduction, on reste sur la valeur du signal de vitesse atteinte en dernier lieu lors de l'augmentation et on augmente le signal de vitesse de référence avec le signal de vitesse de la roue la plus lente et on diminue avec le signal de vitesse de la troisième roue la plus rapide et en ce qu'entre la fin de l'augmentation et le début de la diminution, on maintient la valeur du signal de vitesse atteinte en dernier lieu lors de l'augmentation.

2. Procédé selon la revendication 1, caractérisé en ce qu'on diminue le signal de vitesse de référence à partir du moment où on atteint une différence de vitesse prédéterminée par rapport au signal auxiliaire de vitesse de référence à une distance de cette différence de vitesse parallèlement à la vitesse auxiliaire de référence.

3. Procédé pour obtenir une vitesse de référence dans un système antiblocage comportant une régulation de patinage, en déduisant à partir des signaux de vitesse de roue ou un signal de vitesse de référence et un signal auxiliaire de vitesse de référence dont l'augmentation en cas d'instabilité sur au moins une roue, détermine le profil du signal de vitesse de référence, caractérisé en ce que dans son application à d'un véhicule à quatre roues motrices, toutefois lors du freinage de l'essieu arrière découplé de l'entraînement, on augmente le signal de vitesse de référence avec le signal de vitesse de la troisième roue la plus rapide et on diminue avec le signal de vitesse de la roue la plus rapide et en ce qu'entre la fin de l'augmentation et le début de la diminution, on maintient la valeur du signal de vitesse atteinte en dernier lieu lors de l'augmentation et en ce qu'on augmente le signal de vitesse de référence avec le signal de vitesse de la roue la plus lente et on diminue avec le signal de vitesse de la roue la plus lente parmi celle découplée de l'entraînement, jusqu'à ce qu'entre le signal de vitesse de référence et le signal de vitesse de référence, on a une différence prédéterminée, puis on conduit le signal de vitesse de référence à un écart correspondant à cette différence, parallèlement au signal auxiliaire de vitesse de référence.

4. Procédé selon l'une des revendications 1 à 3, caractérisé en ce qu'on maintient le signal de vitesse de référence lorsque toutes les roues patinent.

5. Procédé selon la revendication 4, caractérisé en ce qu'on détecte le patinage des roues lorsque toutes les roues sont à une accélération de roue plus élevée que l'accélération physiquement possible du véhicule.
